Europäisches Patentamt

European Patent Office

Office européen des brevets

(11) Veröffentlichungsnummer: **0 299 355**
**A2**

## (12) EUROPÄISCHE PATENTANMELDUNG

(21) Anmeldenummer: 88110844.3

(22) Anmeldetag: 07.07.88

(51) Int. Cl.⁴ **G07G 1/14**

(30) Priorität: 15.07.87 CH 2691/87

(43) Veröffentlichungstag der Anmeldung:
**18.01.89 Patentblatt 89/03**

(84) Benannte Vertragsstaaten:
**AT BE DE FR GB IT LU NL SE**

(71) Anmelder: **Zellweger Telecommunications AG**
**Eichtalstrasse**
**CH-8634 Hombrechtikon(CH)**

(72) Erfinder: **Goltz, Volker**
**Hochstrasse 158**
**CH-8330 Pfäffikon(CH)**

(74) Vertreter: **Dittrich, Horst**
**Zellweger Uster AG Patentabteilung**
**Wilstrasse 11**
**CH-8610 Uster(CH)**

(54) **Preisanzeigesystem für Verkaufsräume und/oder Schaufenster.**

(57) Bei den Artikeln sind Preisschilder angeordnet, die durch elektronisch steuerbare Anzeigen (PA) gebildet sind. Diese Anzeigen (PA) sind mit mindestens einem zentralen Steuergerät (SG) für die Stromversorgung und die Lieferung der Preisdaten und gegebenenfalls weiterer Informationen verbunden.

Dadurch können die Preise und insbesondere Preisänderungen am Aufstellungsort der Artikel stets entsprechend dem aktuellen Stand angezeigt werden, ohne dass deren dezentrale Nachführung durch das Personal erforderlich wäre. Ausserdem ist das System über die reine Preisanzeige hinaus für weitere Funktionen ausbaufähig.

FIG. 1

EP 0 299 355 A2

## Preisanzeigesystem für Verkaufsräume und/oder Schaufenster

Die Erfindung betrifft ein Preisanzeigesystem für Verkaufsräume und/oder Schaufenster, in denen die Artikel aufgestellt und am Aufstellungsort und/oder in dessen Nähe Preisschilder vorgesehen sind.

Während vieler Jahre waren die Artikel mit einer festen, von Auge lesbaren Preisaufschrift versehen, die an einer Erfassungsstelle von einer Bedienungsperson abgelesen und in eine Kasse eingetippt wurde. Auch für den Kunden war der Preis erkennbar. In letzter Zeit gehen immer mehr Geschäfte zu einer computergestützen Lagerbewirtschaftung mit einer Artikeldatenbank über. Dabei werden für die Preiserfassung vermehrt Artikelcodes benützt, die an den Erfassungsstellen mit speziellen Lesegeräten von den Artikeln abgelesen werden. Die aktuellen Preisinformationen liefert dann die Artikeldatenbank.

Damit ist die Preisaufschrift im bisherigen Sinn rein technisch nicht mehr erforderlich. Da sie aber vom Gesetzgeber und auch vom Kunden verlangt wird, muss der Hersteller oder der Verkäufer die Preise zusätzlich auf den Artikel aufdrucken oder aufkleben oder er muss an den Verkaufsgestellen entsprechende Preisschilder anbringen. Die letzerere Methode ist aber unflexibel und erfordert eine ständige Nachführung durch das Personal. Anderseits stellt das zusätzliche Anbringen der Preise auf den Artikeln einen erheblichen Mehraufwand dar. Ausserdem ist diese Methode eher noch unflexibler, wenn man beispielsweise an Sonderangebote oder Aktionen denkt.

Durch die Erfindung soll nun das System mit den an den Verkaufsgestellen angebrachten Preisschildern dahingehend verbessert werden, dass keine dezentrale Nachführung durch das Personal mehr erforderlich ist, und dass Aenderungen, wie beispielsweise Preisabschläge und dergleichen, rasch angezeigt werden können. Ausserdem soll das System über die reine Preisanzeige hinaus für weitere Funktionen, wie beispielsweise Verkaufsförderung durch andere Anzeigen und dergleichen, ausbaufähig sein.

Diese Aufgabe wird erfindungsgemäss dadurch gelöst, dass die Preisschilder durch elektronisch steuerbare Anzeigen gebildet sind, welche mit mindestens einem zentralen Steuergerät für die Stromversorgung und die Lieferung der Preisdaten und gegebenenfalls weiterer Informationen verbunden sind.

Das Steuergerät, das seine Informationen vorzugsweise von einem die Artikeldatenbank verwaltenden Rechner erhält, sendet periodisch die Preisdaten an die einzelnen Anzeigen. Eventuelle Aenderungen sind somit an den Anzeigen praktisch sofort verfügbar. Bei entsprechender Ausbildung der Anzeigen, können neben dem Preis auch die Artikelnummer, Zusatztexte und/oder spezielle Effekte angezeigt werden. Ausserdem können spezielle Geräte für die Verkaufsförderung, beispielsweise solche mit Laufschrift, und Zusatzgeräte für weitere Funktionen,beispielsweise Ueberwachungseinrichtungen für Kühlregale oder Tiefkühltruhen, in das System eingefügt werden. Letzteres ermöglicht die Vermeidung von Mehrfachinstallationen.

Im folgenden wird die Erfindung anhand von Ausführungsbeispielen und der Zeichnungen näher erläutert; es zeigt:

Fig. 1 einen schematischen Ausschnitt aus einem Selbstbedienungsladen,

Fig. 2a, b je ein Beispiel für eine erfindungsgemässe Anzeige,

Fig 3 eine schematische Darstellung des Montagesystems für die Anzeigen gemäss Fig. 2a, b,

Fig. 4, ein Beispiel einer Zusatzanzeige,

Fig. 5 ein Blockschema des erfindungsgemässen Systems, und

Fig. 6, 7 Details zum Blockschema von Fig. 5.

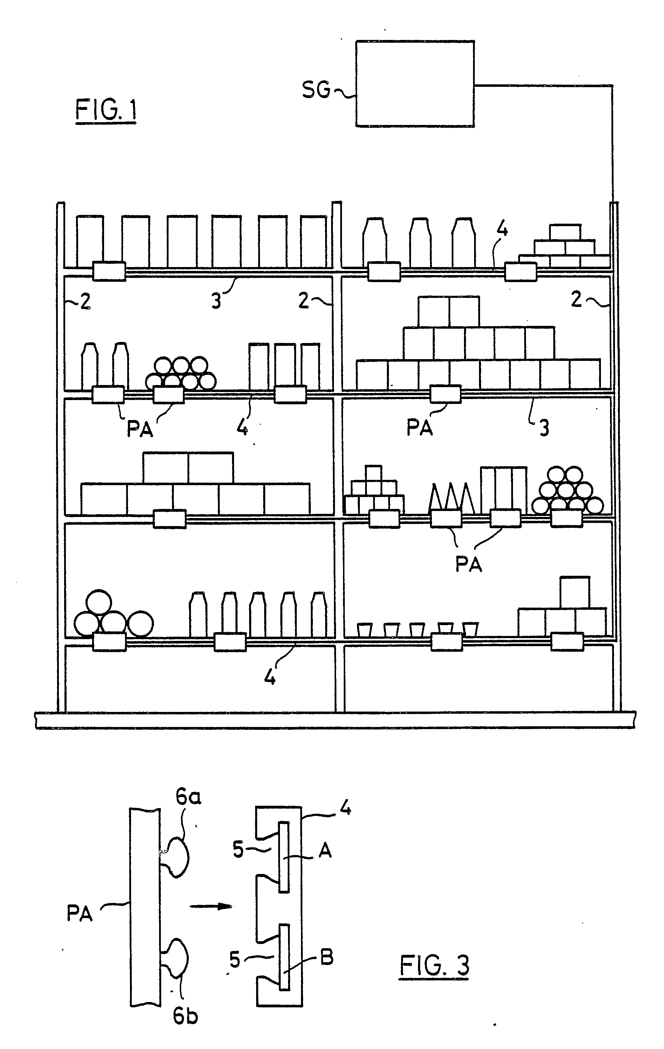

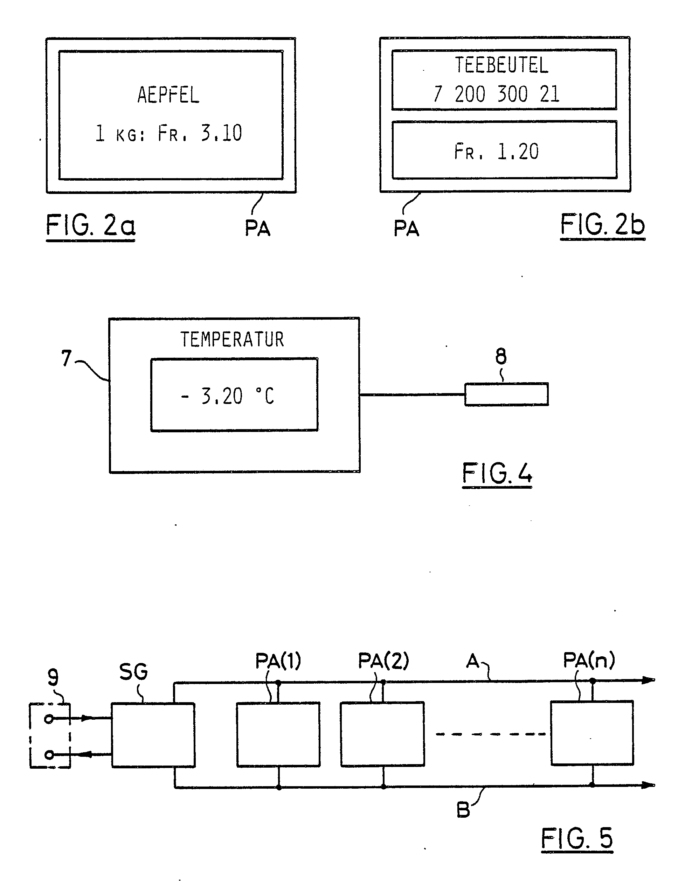

Fig. 1 zeigt ein Warenregal 1 mit Seitenwänden 2 und Tablaren 3, auf denen diverse Artikel zum Verkauf aufgestellt sind. Im Bereich der jeweiligen Artikel, darstellungsgemäss unmittelbar vor diesen, sind Anzeigen PA vorgesehen. Die Anzeigen PA können, so wie in Fig. 2a dargestellt, reine Preisanzeigen sein, oder sie können zusätzlich, wie in Fig. 2b dargestellt, auch die Artikelnummer und gegebenenfalls weitere Informationen enthalten.

Die Befestigung der Anzeigen PA erfolgt gemäss Fig. 3 durch Eindrücken in an den Frontseiten der Tablare 3 oder der Seitenwände 2 vorgesehene Montageschienen 4, die zwei Längsnuten aufweisen, in denen je ein Stromschiene A, B geführt ist. Somit ist wahlweise sowohl eine horizontale als auch eine vertikale Montage der Anzeigen PA möglich. Die Anzeigen PA, die als Etiketten oder kleine Tafeln ausgebildet sind, sind an ihrer Rückseite mit geeigneten Kontaktfedern 6a, 6b oder mit anderen Kontakt- und/oder Befestigungsmitteln aus einem geeigneten Material versehen, die sowohl die Anzeigen PA in den Nuten 5 fixieren als auch die elektrische Verbindung zu den Stromschienen A bzw B herstellen.

Die Anzeigen PA sind für horizontale oder vertikale Montage in verschiedenen Gehäusen und Ausführungen ausgebildet und enthalten als eigentliche Anzeigeeinheit entweder Leuchtdioden (LED) mit selbstleuchtender Anzeige in verschiedenen Farben, oder Flüssigkristallzellen (LCD) üblicher Bauart für Preisanzeige und Artikelbezeichnung ohne (Fig. 2a) und mit (Fig. 2b) Artikelnummernanzeige und Zusatztext oder Spezialeffekten, oder Durchlicht-Flüssigkristallzellen für Einrichtungen mit gemeinsamer Beleuchtung.

Die Stromschienen A, B der Montageschienen 4 bilden eine gemeinsame Speise- und Datenleitung, über die die Anzeigen PA mit einem gemeinsamen Steuergerät verbunden sind, welches die jeweiligen Preisinformationen periodisch an die verschiedenen Anzeigen PA sendet. Das Steuergerät selbst erhält seine Informationen direkt von einem die Artikeldatenbank verwaltenden Rechner. Für jeden Artikel ist somit die Preisinformation laufend aktualisierbar.

In das Anzeigesystem können weitere Anzeigen eingefügt werden, darunter Geräte für die Verkausförderung, die beispielsweise eine Laufschrift aufweisen oder in auffälliger Farbe blinken, oder so wie in Fig. 4 anhand einer Temperaturanzeige 7 für ein Kühlregal dargestellt, diverse Ueberwachungszu sätze, an die in der Regel ein geeigneter Sensor 8 angeschlossen ist.

Die Montageschienen 4 (Fig. 3), die den gestalterischen Gesichtspunkten des jeweiligen Verkaufslokals angepasst sind, sind an den Regalen, Stellagen, Truhen und an den anderen Artikelbehältnissen mit wenig Aufwand, und zwar auch nachträglich, montierbar. Dabei enthält das Montagesystem auch Verbindungsglieder und flexible Anschlusskabel, so dass ein einfacher und modularer Aufbau sichergestellt ist. Um die Verfügbarkeit des Systems zu erhöhen, wird dieses vorzugsweise in verschiedene Stränge unterteilt.

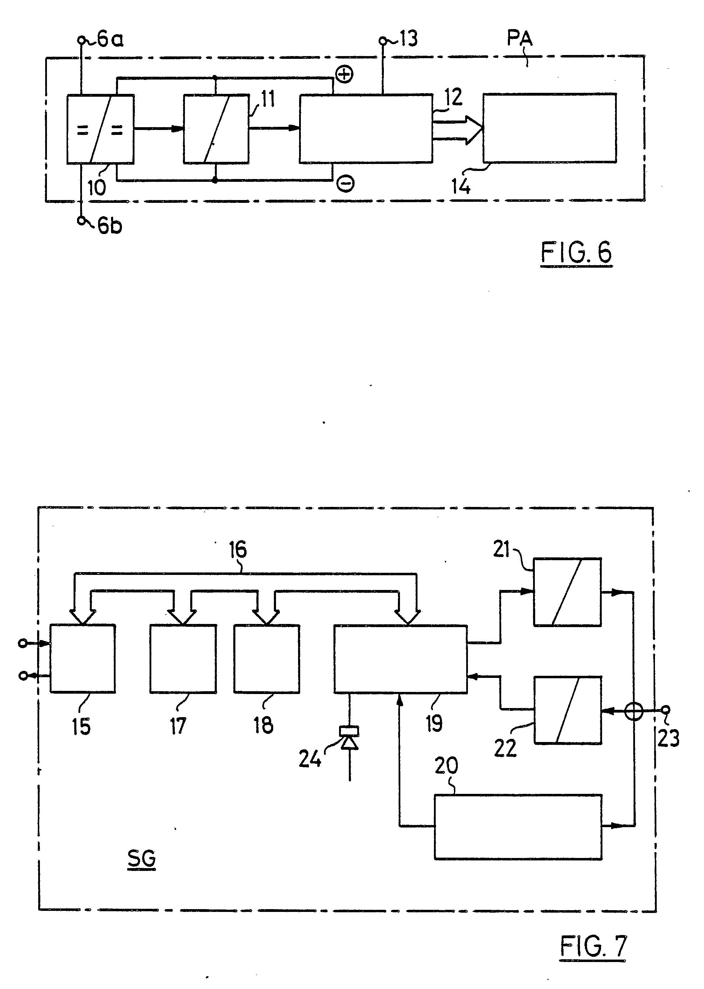

In Fig. 5 ist ein Blockschema des erfindungsgemässen Systems dargestellt, Fig. 6 zeigt ein Blockschema einer Anzeige PA und Fig. 7 zeigt ein Blockschema des Steuergeräts SG des Systems. Man erkennt in Fig. 5 eine Anzahl von Anzeigen PA(1) bis PA(n), die über die in den Montageschienen 4 geführten Stromschienen A, B (Fig. 3) parallel an ein schon erwähntes Steuergerät SG angeschlossen sind. Dieses ist über eine Datenschnittstelle 9 mit dem die Artikeldatenbank verwaltenden Rechner (nicht dargestellt) verbunden.

Das Steuergerät SG kann bis zu 128 und mehr Anzeigen mit Strom und Daten versorgen, wobei die Stromversorgung durch Gleich- oder Wechselstrom oder aus dem Datensignal erfolgen kann. Selbstverständlich können mehrere Steuergeräte SG mit dem genannten Rechner verbunden sein. Je nach Anzahl der angeschlossenen Anzeigen PA beträgt die Wiederholungsrate für die periodische Datenübermittlung an diese zwischen 0,1 und 100 Sekunden. Als Adressbezeichnung für die Datenübermittlung wird für jede Anzeige PA die jeweilige Artikelnummer verwendet. Die Anzeigedaten können durch den Rechner laufend verändert werden. Das Steuergerät dient neben der Versorgung der Anzeigen PA mit Strom und Daten auch zu deren Ueberwachung und führt diese in periodischen Abständen durch.

Gemäss Fig. 6 weist jede Anzeige PA zwei Anschlüsse 6a und 6b zum Anschluss an die Stromschienen A bzw. B (Fig. 3) auf, welche beispielsweise durch Kontaktfedern gebildet sind. Die Anschlüsse 6a, 6b sind an eine Speisungs- und Entkopplungsstufe 10 geführt, welche einerseits mit einem Analog/Daten-Umsetzer 11 und anderseits mit einem Steuerchip 12 verbunden ist. Der Ausgang des Analog/Daten-Umsetzers 11 ist an den Steuerchip 12 geführt, der ausserdem einen Programmierungseingang 13 aufweist und dessen Ausgang mit der eigentlichen Anzeige 14 verbunden ist, welche, wie schon erwähnt, beispielsweise durch Leuchtdioden oder Flüssigkristallzellen gebildet ist.

Der Programmierungseingang 13, der beispielsweise durch einen PROM-Anschluss gebildet ist, dient für das Einlesen der den jeweiligen Artikeln zugeordneten Adressen, welche vorzugsweise durch die Artikelnummern gebildet sind. Dieses Setzen der Adressinformation erfolgt durch ein spezielles tragbares oder stationäres Programmiergerät, an welches ein Lesestift angeschlossen ist. Mit diesem Lesestift wird von dem jeweiligen Artikel der Artikelcode abgelesen und über den Programmierungseingang 13 in den Steuerchip 12 der Anzeige PA eingelesen. Dann wird die letztere in die Montageschiene 4 (Fig. 3) eingesetzt.

Sofern die anzuzeigenden Daten im Steuergerät SG (Fig. 5, 7) verfügbar sind, werden sie bei der nächsten Wiederholung der Datenübermittlung be reits angezeigt. Das Programmiergerät speichert die eingelesenen Adressinformationen, welche an den die Artikeldatenbank verwaltenden Rechner überspielt werden können, wodurch der aktuelle Stand des Artikelangebots mit geringstem Aufwand erfasst werden kann.

Das beschriebene Setzen der Adressinformationen kann mit einer zusätzlichen Kontrolle verbunden werden, indem in das Programmiergerät die Anzahl der jeweiligen Artikel eingegeben und ebenfalls an den Rechner überspielt wird, der mit dieser zusätzlichen Information eine interne Kontrolle über den Artikelbestand durchführen und entsprechende logistische Abläufe steuern und/oder auslösen kann.

Das Steuergerät SG weist gemäss Fig. 7 an seinem Eingang eine an die Datenschnittstelle 9 (Fig. 5) angeschlossene Stufe 15, ein sogenanntes Host-Interface, auf, welche über einen Datenbus 16 mit einem RAM 17, einem PROM 18 und der eigentlichen Steuereinheit 19 verbunden ist. Im RAM 17 sind die Daten für die periodische Datenübermittlung und im PROM 18 sind die Programme gespeichert. Die Steuereinheit 19 ist mit einer Stromversorgungsstufe 20 für die Stromschienen A, B (Fig. 3) und mit dem Eingang bzw. Ausgang je eines Daten/Analog- und Analog/Daten-Umsetzers 21 bzw. 22 verbunden, welche ihrerseits ebenso wie die Stromversorgungstufe 20 mit einem an die Stromschienen A, B angeschlossenen Ausgang 23 des Steuergeräts SG verbunden sind. Die Steuereinheit 19 ist ausserdem mit einer Alarmstufe 24 verbunden, welche zur Abgabe eines den Ueberwachungsfunktionen des Systems zugeordneten Alarmsignals dient.

Derartige Ueberwachungsfunktionen können beispielsweise sein:
- Ueberwachung des Vorhandenseins und/oder des Funktionierens der Anzeigen
- Diebstahlsüberwachung entsprechend gesicherter Artikel
- Ueberwachungszusätze gemäss Fig. 4 und dergleichen.

Die erwähnten Ueberwachungsfunktionen sind hier nicht abschliessend aufgezählt und können in weiten Grenzen erweitert und ausgebaut werden. Ebenso ist die gesamte Beschreibung des Systems, insbesondere die konkrete Ausbildung der Anzeigen PA und deren Montage, nur als beispielhaft zu verstehen. Wesentlich ist der erfinderische Hauptgedanke der elektronisch steuerbaren Preisanzeigen, welche mit.einem oder mehreren zentralen Steuergerät bzw. Steuergeräten verbunden sind und von diesen jeweils die aktuelle Preisinformation erhalten. Vor dem Hintergrund dieses Hauptgedankens liegt die konkrete Ausführung des Systems beim heutigen Stand der Automation und der Datenverarbeitung im Verständnis des Fachmanns.

So können beispielsweise die Anzeigen PA durch Leuchtdioden (LED) speziell beleuchtet sein, und spezielle Anzeigen, wie beispielsweise. die in Fig. 4 dargestellte, können einen Rufknopf aufweisen, mit dem bei Anzeige einer kritischen Temperatur eine Bedienungsperson angefordert werden kann.

**Ansprüche**

1. Preisanzeigesystem für Verkaufsräume und/oder Schaufenster, in denen die Artikel aufgestellt und am Aufstellungsort und/oder in dessen Nähe Preisschilder vorgesehen sind, dadurch gekennzeichnet, dass die Preisschilder durch elektronisch steuerbare Anzeigen (PA) gebildet sind, welche mit mindestens einem zentralen Steuergerät (SG) für die Stromversorgung und die Lieferung der Preisdaten und gegebenenfalls weiterer Informationen verbunden sind.

2. System nach Anspruch 1, dadurch gekennzeichnet, dass das mindestens eine Steuergerät (SG) einen Speicher mit den Artikelcodes der einzelnen Artikel enthält oder an einen einen derartigen Speicher enthaltenden Rechner angeschlossen ist.

3. System nach Anspruch 2, dadurch gekennzeichnet, dass die Artikelcodes die Adressinformationen der einzelnen Anzeigen (PA) bilden.

4. System nach Anspruch 3, dadurch gekennzeichnet, dass die Anzeigen (PA) an das zugeordnete Steuergerät (SG) parallel angeschlossen sind.

5. System nach Anspruch 4, dadurch gekennzeichnet, dass die Anzeigen (PA) zur Darstellung weiterer Informationen ausgebildet sind.

6. System nach Anspruch 5, dadurch gekennzeichnet, dass die weiteren Informationen durch die jeweilige Artikelbezeichnung und/oder Artikelnummer und/oder Zusatztexte und/oder Spezialeffekte gebildet sind.

7. System nach Anspruch 6, gekennzeichnet durch weitere Anzeigen (7) für Verkaufsförderung und/oder Ueberwachungsfunktionen.

8. System nach einem der Ansprüche 1 bis 7, dadurch gekennzeichnet, dass die Aussendung der jeweiligen Informationen an die Anzeigen (PA, 7) durch das zugeordnete Steuergerät (SG) periodisch erfolgt.

9. System nach Anspruch 8, dadurch gekennzeichnet, dass die Anzeigen (PA, 7) etikettenartig, in Form kleiner Tafeln ausgebildet sind und Befestigungsmittel, elektrische Anschlussmittel und Anzeigemittel aufweisen.

10. System nach Anspruch 9, bei welchem die Artikel auf Regalen und/oder in Behältnissen angeordnet sind, dadurch gekennzeichnet, dass die Regale (2, 3) und/oder die Behältnisse Montagemittel für die Anzeigen (PA, 7) aufweisen.

11. System nach Anspruch 10, dadurch gekennzeichnet, dass die Montagemittel durch Montageschienen (4) gebildet sind und Stromzuführungen (5) für die Anzeigen (PA, 7) enthalten und somit eine gemeinsame Speise- und Datenleitung bilden, über welche die Anzeigen mit dem zugeordneten gemeinsamen Steuergerät (SG) verbunden sind.

12. System nach Anspruch 11, dadurch gekennzeichnet, dass die Befestigungsmittel und die elektrischen Anschlussmittel für die Anzeigen (PA, 7) durch gemeinsame, mit den Montageschienen (4) lösbar verbindbare Elemente (6a, 6b) gebildet sind.

13. System nach einem der Ansprüche 9 bis 12, dadurch gekennzeichnet, dass die Anzeigemittel durch Leuchtdioden gebildet sind.

14. System nach einem der Ansprüche 9 bis 12, dadurch gekennzeichnet, dass die Anzeigemittel durch Flüssigkristallzellen gebildet sind.

15. System nach Anspruch 11, dadurch gekennzeichnet, dass die Montageschienen (4) an den Regalen (2, 3) und/oder Behältnissen nachträglich montierbar ausgebildet sind.

FIG. 1

SG

4

~2

3

2

2

PA

4

PA

3

PA

4

6a

4

5~

A

PA

5~

B

6b

FIG. 3

AEPFEL

1 KG: FR. 3.10

FIG. 2a          PA

TEEBEUTEL
7 200 300 21

FR. 1.20

PA          FIG. 2b

TEMPERATUR

- 3.20 °C

7          8

FIG. 4

9     SG     PA(1)     PA(2)     A          PA(n)

B

FIG. 5

EP 0 299 355 A2

FIG. 6

FIG. 7